# EUROPEAN PATENT SPECIFICATION

(11) **EP 3 204 895 B1**
(45) Date of publication and mention of the grant of the patent: **04.12.2019**
(21) Application number: 15778935.5
(22) Date of filing: 12.10.2015
(51) Int. Cl.: G06K 19/07, G06K 19/073

(54) **POWER LOAD MANAGEMENT**
VERWALTUNG VON ENERGIELASTEN
GESTION DE CHARGE D'ÉNERGIE

(30) Priority: 10.10.2014 US 201462062244 P; 14.05.2015 GB 201508282
(43) Date of publication of application: 16.08.2017
(73) Proprietor: Zwipe AS, 0151 Oslo (NO)
(72) Inventor: FIELD, Daniel William, Broomfield, CO 80020 (US)
(74) Representative: Dehns
(86) International application number: PCT/EP2015/073541
(87) International publication number: WO 2016/055662

(56) References cited:
- WO-A1-98/43218
- US-A1- 2004 263 319

## Description

The present invention relates to power load management in an RFID device, and particularly to power load management in a passive RFID device including additional components requiring power, such as a biometric sensor.

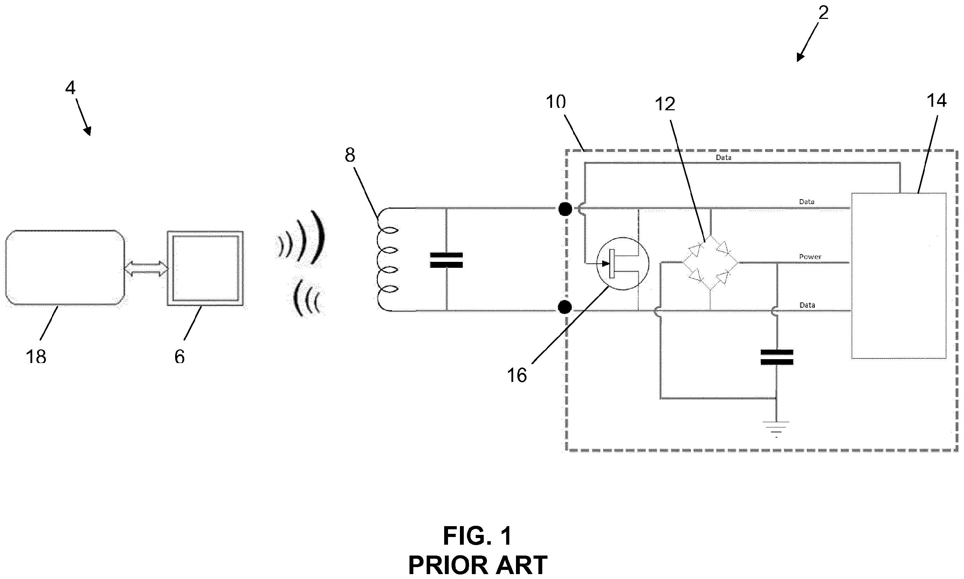

Figure 1 shows the architecture of a typical passive RFID device 2. A powered RFID reader 4 transmits a signal via an antenna 6, which is typically 13.56 MHz for MIFARE® and DESFire® systems, manufactured by NXP Semiconductors, but may be 125 kHz for lower frequency PROX® products, manufactured by HID Global Corp. This signal is received by an antenna 8 of the RFID device 2, comprising a tuned coil and capacitors, and then passed to an RFID chip 10. The received signal is rectified by a bridge rectifier 12, and the DC output of the rectifier 12 is provided to control logic 14 that controls the messaging from the chip 10.

Data output from the control logic 14 is connected to a field effect transistor 16 that is connected across the antenna 8. By switching on and off the transistor 16, a signal can be transmitted by the RFID device 2 and decoded by suitable control circuits 18 in the reader 4. This type of signalling is known as backscatter modulation and is characterised by the fact that the reader 4 is used to power the return message to itself.

Further passive RFID devices including the features set out in the preamble to claim 1 are known from WO 98/43218 and US 2004/263319.

It has been proposed to incorporate a biometric sensor, such a fingerprint scanner, into a passive RFID device. However, a biometric sensor has relatively high power requirements and so careful management of the power load is required.

The present invention provides a circuit for a passive or semi-passive RFID device, comprising: an antenna for receiving an RF signal, the antenna having first and second pairs of terminals, wherein at least one terminal of the pair of second terminals is connected to the antenna between the first pair of terminals such that, when the RF signal is received by the antenna, a voltage generated across the second pair of terminals is lower than a voltage generated across the first pair of terminals; a first processing device for controlling an output of the RFID device, wherein the first processing device is powered by the voltage generated across the antenna, preferably the voltage generated across the first pair of terminals; and a second processing device separate from the first processing device; wherein the circuit has first and second modes of operation, the second processing device requiring more power during the first mode of operation than in the second mode of operation; and wherein the circuit is arranged to power the second processing device using the voltage generated across the first pair of terminals when the circuit is operating in the first mode of operation, and to power the second processing device using the voltage generated across the second pair of terminals when the circuit is operating in the second mode of operation.

As used herein, the term "passive RFID device" should be understood to mean an RFID device in which the first processing device (e.g. an RFID chip) is powered only by energy harvested from an RF excitation field, for example generated by an RFID reader. That is to say, a passive RFID device relies on the RFID reader to supply its power for broadcasting. A passive RFID device would not normally include a battery, although a battery may be included to power auxiliary components of the circuit (but not to broadcast); such devices are often referred to as "semi-passive RFID devices".

In the present invention, the second processing device is also powered only by the harvested energy. However, only low levels of energy can be harvested in this manner, and it is therefore important that the power drawn by the circuit be carefully managed. If the excitation field is overloaded, then the first processing device will receive insufficient power to broadcast a return signal.

The present invention overcomes this problem by using an antenna having first and second pairs of terminals having different voltage outputs. When the second processing device is operating in a high-power mode of operation, the larger voltage is supplied, but when operating in a low-power mode of operation, a smaller voltage is supplied ensuring that at least a minimum voltage level is reserved for the first processing device to allow a signal to be broadcast.

Preferably, as discussed above, the first processing device communicates with an RFID scanner in the second mode of operation, for example by backscatter modulation. Thus, in the second mode, a portion of the incoming RF signal is not passed to the second processing device, but is reserved for the first processing device to ensure it has sufficient power to broadcast.

The second processing device preferably comprises a biometric sensor, such as a fingerprint scanner. Such devices have relatively high power requirements and could otherwise prevent the first processing device from receiving sufficient power.

Preferably, in the first mode of operation, the biometric sensor scans biometric data and compares it to prestored biometric data. This part of the processing has the highest power demand and so all of the harvested voltage is preferably made available for the second processing device during this time.

In some embodiments, the circuit may comprise a switch (such as a transistor) having a first state and a second state, wherein when the switch is in the first state the second processing device is powered by the voltage generated across the first pair of terminals, and when the switch is in the second state the second processing device is powered by the voltage generated across the second pair of terminals.

The switch may be controlled so as to be in the first state when the circuit is operating in the first mode of operation, and to be in the second state when the circuit is operating in the second mode of operation.

In order to generate a lower voltage across the second pair of terminals than the first pair of terminals, the first pair of terminals may be connected to the antenna such that the voltage across the terminals is the voltage generated across a first length of the antenna, preferably the full length of the antenna, and the second pair of terminals may be connected to the antenna such that the voltage across the terminals is the voltage generated across a second length of the antenna that is shorter than the first length. The two lengths of the antenna preferably overlap; that is to say, voltage generated across part of the antenna is supplied to both sets of terminals.

In some embodiments, one terminal of the first pair of terminals may also a terminal of the second pair of terminals. Thus, where a switch is used, the switch may be connected the other terminals of the first and second pairs of terminals. Thus, a single switch can be used to switch power supply to the second processing device between the first pair of terminals and the second pair of terminals.

Whilst the first pair terminals could be arranged mid-way along the antenna, it is preferred that they are connected at the ends. Thus, preferably, the voltage generated across the first pair of terminals comprises substantially the full voltage generated across the antenna.

In preferred embodiments, the RFID device is a contactless integrated circuit card.

Thus, a preferred embodiment provides a circuit for a passive RFID card, comprising: an antenna for receiving an RF signal, the antenna having first and second pairs of terminals, wherein the first pair of terminals receive substantially the full voltage generated across the antenna, and wherein at least one terminal of the second pair of terminals is connected to the antenna between the first pair of terminals such that a voltage generated across the second pair of terminals is lower than a voltage generated across the first pair of terminals; an RFID chip for controlling an output of the RFID card, wherein the RFID chip is powered only by the voltage generated across the first pair of terminals; a biometrics processing device separate from the RFID chip and comprising a fingerprint sensor; and a switch having a first state and a second state, wherein when the switch is in the first state the biometrics processing device is powered by the voltage generated across the first pair of terminals, and when the switch is in the second state the biometrics processing device is powered by the voltage generated across the second pair of terminals; wherein the circuit has first and second modes of operation, the biometric sensor scanning fingerprint data and compares it to pre-stored fingerprint data in the first mode of operation, and the RFID chip communicating with an RFID scanner in the second mode of operation; and wherein the circuit is configured so that the switch is controlled to be in the first state when the circuit is operating in the first mode of operation, and to be in the second state when the circuit is operating in the second mode of operation.

In a preferred aspect, the present invention also provides a passive or semi-passive RFID device including a circuit as described above, optionally including any or all of the preferred features.

Viewed from another aspect, the present invention can also be seen to provide a method for controlling a circuit for a passive or semi-passive RFID device comprising a first processing device that controls an output of the RFID device and a second processing device separate from the first processing device, the method comprising: receiving an RF signal via an antenna of the RFID device; powering the first processing device using a voltage generated across a first pair of terminals of the antenna; in a first mode of operation, powering the second processing device using the voltage generated across the first pair of terminals of the antenna; and in a second mode of operation, powering the second processing device using a voltage generated across a second pair of terminals of the antenna, wherein at least one of the pair of second terminals is connected to the antenna between the first pair of terminals such that, when the RF signal is received by the antenna, a voltage generated across the second pair of terminals is lower than a voltage generated across the first pair of terminals.

The method of the present invention overcomes the above described problem by using the full voltage from the first pair of terminals of the antenna to power the second processing device when it is operating in a first (e.g. high power) mode of operation, but only using a portion of the voltage, via the second pair of terminals, when it is operating in a second (e.g. low-power) mode of operation. Thus, the method ensures that at least a minimum voltage level, generated by the portion of the antenna not being used to power the second processing device, is reserved for the first processing device to allow a signal to be broadcast.

Preferably, the method further comprises, in the second mode of operation, communicating with an RFID scanner using the first processing device, for example by backscatter modulation.

The second processing device preferably comprises a biometric sensor, such as a fingerprint scanner. The method then preferably further comprises, in the first mode of operation, scanning biometric data and comparing the scanned biometric data to pre-stored biometric data using the second processing device. In the case of a fingerprint scanner, the biometric data may be fingerprint data.

The method may comprise, transitioning from the first mode of operation to the second mode of operation and controlling a switch (such as a transistor) to move from a first state, in which the second processing device is powered by the voltage generated across the first pair of terminals, to second state, in which the second processing device is powered by the voltage generated across the second pair of terminals.

In order to generate a lower voltage across the second pair of terminals than the first pair of terminals, the first pair of terminals may be connected to the antenna such that the voltage across the terminals is the voltage generated across a first length of the antenna, preferably the full length of the antenna, and the second pair of terminals may be connected to the antenna such that the voltage across the terminals is the voltage generated across a second length of the antenna that is shorter than the first length. The two lengths of the antenna preferably overlap; that is to say, voltage generated across part of the antenna is supplied to both sets of terminals.

Preferably, the voltage generated across the first pair of terminals is the voltage generated across substantially the full length of the antenna.

In preferred embodiments, the RFID device is a contactless integrated circuit card.

The RFID device may be any one of: an access card, a credit card, a debit card, a pre-pay card, a loyalty card, an identity card, a cryptographic card, or the like.

It will further be appreciated that all of the above described preferred features of the circuit apply also to the method, and vice versa, either individually or in combination.

Certain preferred embodiments of the present invention will now be described in greater detail, by way of example only and with reference to the accompanying Figures, in which:
Figure 1 illustrates a circuit for a prior art passive RFID device;
Figure 2 illustrates a circuit for a passive RFID device incorporating a fingerprint scanner; and
Figure 3 illustrates a circuit for a passive RFID device incorporating a fingerprint scanner and having improved power load management.

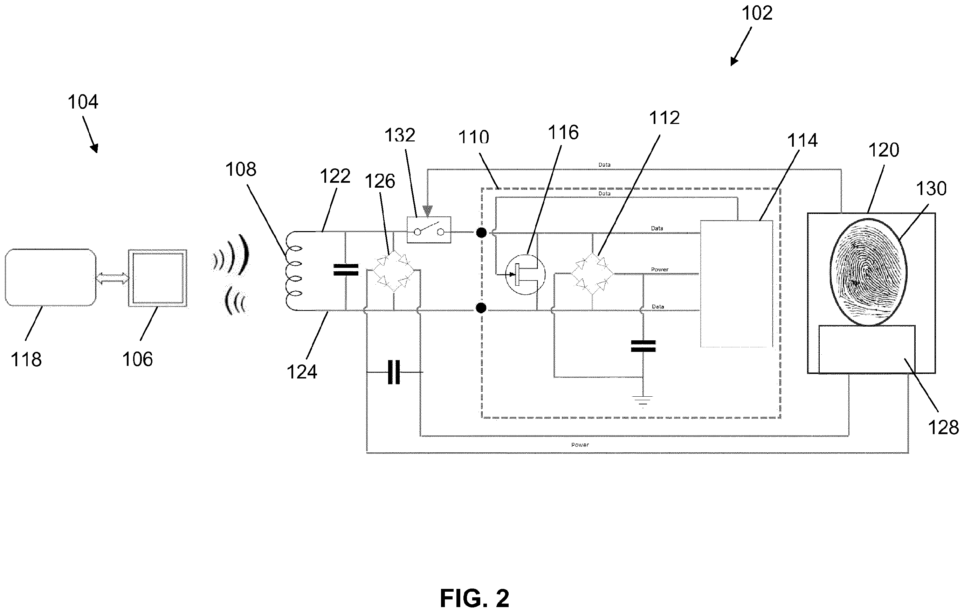

Figure 2 shows the architecture of an RFID reader 104 and a passive RFID device 102, which is a variation of the prior art passive RFID device 2 shown in Figure 1. The RFID device 102 shown in Figure 2 has been adapted to include a fingerprint authentication engine 120.

The RFID reader 104 is a conventional RFID reader, and is configured to generate an RF excitation field using a reader antenna 106. The reader antenna 106 further receives incoming RF signals from the RFID device 102, which are decoded by control circuits 118 within the RFID reader 104.

The RFID device 102 comprises an antenna 108 for receiving an RF (radiofrequency) signal, a passive RFID chip 110 powered by the antenna, and a passive fingerprint authentication engine 120 powered by the antenna.

The antenna comprises a tuned circuit, in this arrangement including a induction coil and a capacitor, tuned to receive an RF signal from the RFID reader 104. When exposed to the excitation field generated by the RFID reader 104, a voltage is induced across the antenna 108. The antenna 108 has first and second end output lines 122, 124, one at each end of the antenna 108, which constitute a pair of terminals.

The output lines of the antenna 108 are connected to the fingerprint authentication engine 120 to provide power to the fingerprint authentication engine 120. In this arrangement, a rectifier 126 is provided to rectify the AC voltage received by the antenna 108. The rectified DC voltage is smoothed using a smoothing capacitor and supplied to the fingerprint authentication engine 120.

The fingerprint authentication engine 120 includes a processing unit 128 and a fingerprint reader 130. The fingerprint authentication engine 120 is passive, and hence is powered only by the voltage output from the antenna 108.

The fingerprint authentication engine 120 is arranged to scan a finger or thumb presented to the fingerprint reader 130 and to compare the scanned fingerprint of the finger or thumb to pre-stored fingerprint data using the processing unit 128. A determination is then made as to whether the scanned fingerprint matches the pre-stored fingerprint data.

If a match is determined, then the RFID chip 110 is authorised to transmit a signal to the RFID reader 104. In the Figure 2 arrangement, this is achieved by closing a switch 132 to connect the RFID chip 110 to the antenna. The RFID chip 110 is conventional and operates in the same manner as the RFID chip 10 shown in Figure 1 to broadcast a signal via the antenna 108 using backscatter modulation by switch on and off a transistor 116.

In this arrangement, the power for the RFID chip 110 and the fingerprint authentication engine 120 is harvested from the excitation field generated by the RFID reader 104. It is important that the power drawn by these circuits be carefully managed, or else communication could break down. If the excitation field is over loaded, then the RFID chip 110 could receive a power signal that is too small to be used.

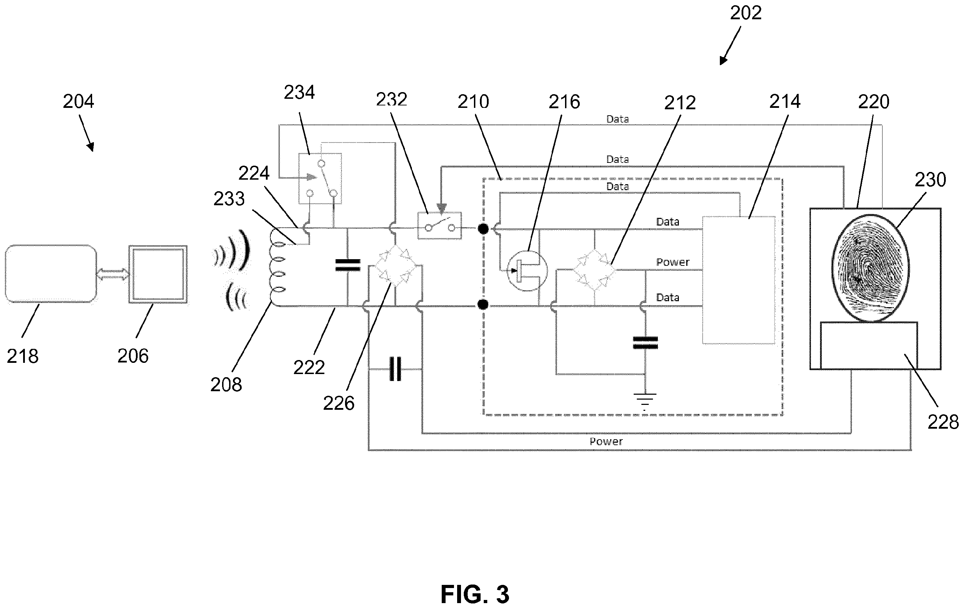

Figure 3 shows the architecture of an RFID reader 204 and a passive RFID device 202, which is a variation of the passive RFID device 2 shown in Figure 2. The RFID device 202 shown in Figure 3 has been adapted, in accordance with the present invention, to more efficiently handle power distribution within the circuit.

The RFID device 202 and RFID reader 204 shown in Figure 3 are similar to those shown in Figure 2 and components corresponding to those shown in Figure 2 share the same reference numeral, incremented by 100. To avoid repletion, only the differences between these arrangements will be discussed below. The discussion of the components shown in Figure 2 otherwise applies also to the corresponding components shown in Figure 3.

The power drawn by the fingerprint authentication engine 220 varies with the part of the cycle that device 202 is in. During fingerprint sensing and matching (a first mode of operation) the power draw of the fingerprint authentication engine 220 is at its highest. During the time that the RFID chip 210 is connected and is communicating to the reader 204, the power draw of the fingerprint authentication engine 220 is quite low.

The RFID device 202 shown in Figure 3 further includes a middle output line 233 connected at to the antenna 108 at a location between its ends. Thus, the first end output line 222 and the middle output line 232 constitute a second pair of terminals.

The circuit further includes a power control switch 234 having a first and a second state. In the first state the fingerprint authentication engine 220 is powered by the voltage generated across the first pair of terminals 222, 224, and when the power control switch is in the second state, the voltage generated across the first pair of terminals 222, 232. In this arrangement, the first end line 222 is always connected to the rectifier 226 and the power control switch 234 alternately connects either the second end output line 224 to the rectifier 226, in a first state (shown in Figure 3), or the middle output line 232 to the rectifier 226, in a second state. However, it will be apparent that many alternate switching configurations could be used to achieve the same effect.

The circuit includes control logic, for example in the fingerprint authorisation engine 220, configured to move the power control switch 234 to the first state during fingerprint reading and matching and to the second state during communication between the RFID chip 210 and the reader 204.

This arrangement provides a valuable improvement that can be made to ensure that sufficient power is provided to the RFID chip 210 during transmission. Thus, when the power control switch 234, which is under the control of the microprocessor in the fingerprint authentication engine, is in the first position, the full power signal is drawn from the antenna 208 by the fingerprint authentication engine 220, and when the power control switch 234 is in the second position, only a fraction of the antenna 208 signal is drawn.

## Claims

1. A circuit (202) for a passive or semi-passive RFID device, comprising:
an antenna (208) for receiving an RF signal, the antenna having first (222,224) and second (222, 233) pairs of terminals, wherein at least one terminals of the second pair of terminals is connected to the antenna between the first pair of terminals such that, when the RF signal is received by the antenna, a voltage generated across the second pair of terminals is lower than a voltage generated across the first pair of terminals; and
a first processing device (214) for controlling an output of the RFID device, wherein the first processing device is powered by a voltage generated across the antenna;
**characterised by**:
a second processing device (220) separate from the first processing device;
wherein the circuit has first and second modes of operation, the second processing device requiring more power during the first mode of operation than in the second mode of operation; and
wherein the circuit is arranged to power the second processing device using the voltage generated across the first pair of terminals when the circuit is operating in the first mode of operation, and to power the second processing device using the voltage generated across the second pair of terminals when the circuit is operating in the second mode of operation.

2. A circuit according to claim 1, wherein the first processing device communicates with an RFID scanner (204) in the second mode of operation.

3. A circuit according to claim 1 or 2, wherein the second processing device comprises a biometric sensor (230), such as a fingerprint scanner.

4. A circuit according to claim 3, wherein, in the first mode of operation, the biometric sensor scans biometric data and the second processing device compares the scanned biometric data to pre-stored biometric data.

5. A circuit according to any preceding claim, comprising:
a switch (234) having a first state and a second state, wherein, when the switch is in the first state, the second processing device is powered by the voltage generated across the first pair of terminals; and
wherein, when the switch is in the second state, the second processing device is powered by the voltage generated across the second pair of terminals.

6. A circuit according to claim 5, wherein the circuit is arranged such that switch is controlled so as to be in the first state when the circuit is operating in the first mode of operation and to be in the second state when the circuit is operating in the second mode of operation.

7. A circuit according to claim 6, wherein one terminal (222) of the first pair of terminals is also a terminal of the second pair of terminals, and wherein the switch is alternately connectable to the other terminal (224) of the first pair of terminals and to the other (233) of the second pair of terminals.

8. A circuit according to any preceding claim, wherein the first pair of terminals is connected to the antenna such that the voltage across the terminals is the voltage generated across a first length of the antenna, and wherein the second pair of terminals is connected to the antenna such that the voltage across the terminals is the voltage generated across a second length of the antenna that is shorter than the first length.

9. A passive or semi-passive RFID device including a circuit according to any preceding claim.

10. A method for controlling a circuit (202) for a passive or semi-passive RFID device comprising a first processing device (214) that controls an output of the RFID device and a second processing device (220) separate from the first processing device, the method comprising:
receiving an RF signal via an antenna (208) of the RFID device;
powering the first processing device using a voltage generated across the antenna;
in a first mode of operation, powering the second processing device using the voltage generated across the first pair (222, 224) of terminals of the antenna; and
in a second mode of operation, powering the second processing device using a voltage generated across a second pair (222, 233) of terminals of the antenna,
wherein at least one of the pair of second terminals is connected to the antenna between the first pair of terminals such that, when the RF signal is received by the antenna, a voltage generated across the second pair of terminals is lower than a voltage generated across the first pair of terminals.

11. A method according to claim 10, further comprising:
in the second mode of operation, communicating with an RFID reader (204) using the first processing device.

12. A method according to claim 11, wherein the second processing device comprises a biometric sensor (230), such as a fingerprint scanner, the method further comprising:
in the first mode of operation, scanning biometric data using the biometric sensor, and comparing the scanned biometric data to pre-stored biometric data using the second processing device.

13. A method according to any of claims 10 to 12, comprising:
transitioning from the first mode of operation to the second mode of operation, wherein the transitioning includes controlling a switch (234) to move from a first state, in which the second processing device is powered by the voltage generated across the first pair of terminals, to second state, in which the second processing device is powered by the voltage generated across the second pair of terminals.

14. A method according to any of claims 10 to 13, wherein the first pair of terminals is connected to the antenna such that the voltage across the terminals is the voltage generated across a first length of the antenna, and wherein the second pair of terminals may be connected to the antenna such that the voltage across the terminals is the voltage generated across a second length of the antenna that is shorter than the first length.

15. A circuit, an RFID device, or method according to any preceding claim, wherein the RFID device is a contactless integrated circuit card.

## Patentansprüche

1. Schaltung (202) für eine passive oder semipassive RFID-Vorrichtung, umfassend:
eine Antenne (208) zum Empfangen eines RF-Signals, wobei die Antenne erste (222,224) und zweite (222, 233) Paare von Anschlüssen aufweist, wobei zumindest eine Anschlüsse des zweiten Paares von Anschlüssen mit der Antenne so zwischen dem ersten Paar von Anschlüssen verbunden ist, dass, wenn das RF-Signal von der Antenne empfangen wird, eine Spannung über das zweite Paar von Anschlüssen erzeugt wird, die niedriger als eine Spannung ist, die über das erste Paar von Anschlüssen erzeugt wird; und
eine erste Verarbeitungsvorrichtung (214) zum Steuern eines Ausgangs der RFID-Vorrichtung, wobei die erste Verarbeitungsvorrichtung von einer Spannung mit Energie versorgt wird, die über die Antenne erzeugt wird;
**gekennzeichnet durch**:
eine zweite Verarbeitungsvorrichtung (220), separat von der ersten Verarbeitungsvorrichtung;
wobei die Schaltung erste und zweite Betriebsmodi aufweist, die zweite Verarbeitungsvorrichtung während dem ersten Betriebsmodus mehr Energie benötigt als im zweiten Betriebsmodus; und
wobei die Schaltung angeordnet ist, die zweite Verarbeitungsvorrichtung unter Verwendung der Spannung, die über das erste Paar von Anschlüssen erzeugt wird, mit Energie zu versorgen, wenn die Schaltung im ersten Betriebsmodus arbeitet und um die zweite Verarbeitungsvorrichtung unter Verwendung der Spannung mit Energie zu versorgen, die über das zweite Paar von Anschlüssen erzeugt wird, wenn die Schaltung im zweiten Betriebsmodus arbeitet.

2. Schaltung nach Anspruch 1, wobei die erste Verarbeitungsvorrichtung mit einem RFID-Scanner (204) im zweiten Betriebsmodus kommuniziert.

3. Schaltung nach Anspruch 1 oder 2, wobei die zweite Verarbeitungsvorrichtung einen biometrischen Sensor (230) wie z.B. einen Fingerabdruckscanner umfasst.

4. Schaltung nach Anspruch 3, wobei im ersten Betriebsmodus der biometrische Sensor biometrische Daten scannt und die zweite Verarbeitungsvorrichtung die gescannten biometrischen Daten mit vorgespeicherten biometrischen Daten vergleicht.

5. Schaltung nach einem der vorstehenden Ansprüche, umfassend:
einen Schalter (234), der einen ersten Zustand und einen zweiten Zustand aufweist,
wobei, wenn der Schalter im ersten Zustand ist, die zweite Verarbeitungsvorrichtung von der Spannung mit Energie versorgt wird, die über das erste Paar von Anschlüssen erzeugt wird; und
wobei, wenn der Schalter im zweiten Zustand ist, die zweite Verarbeitungsvorrichtung von der Spannung mit Energie versorgt wird, die über das zweite Paar von Anschlüssen erzeugt wird.

6. Schaltung nach Anspruch 5, wobei die Schaltung so angeordnet ist, dass ein Schalter gesteuert wird, im ersten Zustand zu sein, wenn die Schaltung im ersten Betriebsmodus arbeitet, und im zweiten Zustand zu sein, wenn die Schaltung im zweiten Betriebsmodus arbeitet.

7. Schaltung nach Anspruch 6, wobei ein Anschluss (222) des ersten Paars von Anschlüssen auch ein Anschluss des zweiten Paars von Anschlüssen ist und wobei die Schaltung abwechselnd mit dem anderen Anschluss (224) des ersten Paars von Anschlüssen und dem anderen (233) des zweiten Paars von Anschlüssen verbunden werden kann.

8. Schaltung nach einem der vorstehenden Ansprüche, wobei das erste Paar von Anschlüssen mit der Antenne so verbunden ist, dass die Spannung über die Anschlüsse die Spannung ist, die über eine erste Länge der Antenne erzeugt wird, und wobei das zweite Paar von Anschlüssen mit der Antenne so verbunden ist, dass die Spannung über die Anschlüsse die Spannung ist, die über eine zweite Länge der Antenne erzeugt wird, die kürzer als die erste Länge ist.

9. Passive oder semipassive RFID-Vorrichtung, die eine Schaltung nach einem der vorstehenden Ansprüche beinhaltet.

10. Verfahren zum Steuern einer Schaltung (202) für eine passive oder semipassive RFID-Vorrichtung, die eine erste Verarbeitungsvorrichtung (214), die einen Ausgang der RFID-Vorrichtung steuert, und eine zweite Verarbeitungsvorrichtung (220) separat von der ersten Verarbeitungsvorrichtung umfasst, wobei das Verfahren umfasst:
Empfangen eines RF-Signals über eine Antenne (208) der RFID-Vorrichtung;
mit Energie versorgen der ersten Verarbeitungsvorrichtung unter Verwendung einer Spannung, die über die Antenne erzeugt wird;
in einem ersten Betriebsmodus, mit Energie versorgen der zweiten Verarbeitungsvorrichtung unter Verwendung der Spannung, die über das erste Paar (222, 224) von Anschlüssen der Antenne erzeugt wird; und
in einem zweiten Betriebsmodus, mit Energie versorgen der zweiten Verarbeitungsvorrichtung unter Verwendung einer Spannung, die über ein zweites Paar (222, 233) von Anschlüssen der Antenne erzeugt wird,
wobei zumindest einer des Paars zweiter Anschlüsse mit der Antenne zwischen dem ersten Paar von Anschlüssen so verbunden ist, dass, wenn das RF-Signal von der Antenne empfangen wird, eine Spannung, die über das zweite Paar von Anschlüssen erzeugt wird, niedriger als eine Spannung ist, die über das erste Paar von Anschlüssen erzeugt wird.

11. Verfahren nach Anspruch 10, weiter umfassend:
im zweiten Betriebsmodus, Kommunizieren mit einem RFID-Lesegerät (204) unter Verwendung der ersten Verarbeitungsvorrichtung.

12. Verfahren nach Anspruch 11, wobei die zweite Verarbeitungsvorrichtung einen biometrischen Sensor (230) wie z.B. einen Fingerabdruckscanner umfasst, wobei das Verfahren weiter umfasst:
im ersten Betriebsmodus, Scannen biometrischer Daten unter Verwendung des biometrischen Sensors und Vergleichen der gescannten biometrischen Daten mit vorab gespeicherten biometrischen Daten unter Verwendung der zweiten Verarbeitungsvorrichtung.

13. Verfahren nach einem der Ansprüche 10 bis 12, umfassend:
Übergehen vom ersten Betriebsmodus zum zweiten Betriebsmodus, wobei das Übergehen ein Steuern eines Schalters (234) beinhaltet, sich von einem ersten Zustand, in dem die zweite Verarbeitungsvorrichtung von der Spannung mit Energie versorgt wird, die über das erste Paar von Anschlüssen erzeugt wird, zu einem zweiten Zustand zu bewegen, in dem die zweite Verarbeitungsvorrichtung durch die Spannung mit Energie versorgt wird, die über das zweite Paar von Anschlüssen erzeugt wird.

14. Verfahren nach einem der Ansprüche 10 bis 13, wobei das erste Paar von Anschlüssen so mit der Antenne verbunden ist, dass die Spannung über die Anschlüsse die Spannung ist, die über eine erste Länge der Antenne erzeugt wird und wobei das zweite Paar von Anschlüssen mit der Antenne so verbunden sein kann, dass die Spannung über die Anschlüsse die Spannung ist, die über eine zweite Länge der Antenne erzeugt wird, die kürzer als die erste Länge ist.

15. Schaltung, RFID-Vorrichtung oder Verfahren nach einem der vorstehenden Ansprüche, wobei die RFID-Vorrichtung eine kontaktlose integrierte Schaltungskarte ist.

## Revendications

1. Circuit (202) pour un dispositif RFID passif ou semi-passif, comprenant :
une antenne (208) pour recevoir un signal RF, l'antenne présentant des première (222,224) et seconde (222, 233) paires de bornes, dans lequel au moins une borne de la seconde paire de bornes est raccordée à l'antenne entre la première paire de bornes de telle sorte que, lorsque le signal RF est reçu par l'antenne, une tension générée à travers la seconde paire de bornes soit inférieure à une tension générée à travers la première paire de bornes ; et
un premier dispositif de traitement (214) pour commander une sortie du dispositif RFID, dans lequel le premier dispositif de traitement est alimenté par une tension générée à travers l'antenne ;
**caractérisé par** :
un second dispositif de traitement (220) séparé du premier dispositif de traitement ;
dans lequel le circuit présente des premier et second modes de fonctionnement, le second dispositif de traitement nécessitant plus de puissance pendant le premier mode de fonctionnement que dans le second mode de fonctionnement ; et
dans lequel le circuit est conçu pour alimenter le second dispositif de traitement en utilisant la tension générée à travers la première paire de bornes lorsque le circuit fonctionne dans le premier mode de fonctionnement, et pour alimenter le second dispositif de traitement en utilisant la tension générée à travers la seconde paire de bornes lorsque le circuit fonctionne dans le second mode de fonctionnement.

2. Circuit selon la revendication 1, dans lequel le premier dispositif de traitement communique avec un scanner RFID (204) dans le second mode de fonctionnement.

3. Circuit selon la revendication 1 ou 2, dans lequel le second dispositif de traitement comprend un capteur biométrique (230), tel qu'un scanner d'empreinte digitale.

4. Circuit selon la revendication 3, dans lequel, dans le premier mode de fonctionnement, le capteur biométrique scanne des données biométriques et le second dispositif de traitement compare les données biométriques scannées à des données biométriques préenregistrées.

5. Circuit selon l'une quelconque des revendications précédentes, comprenant :
un commutateur (234) présentant un premier état et un second état,
dans lequel, lorsque le commutateur est dans le premier état, le second dispositif de traitement est alimenté par la tension générée à travers la première paire de bornes ; et
dans lequel, lorsque le commutateur est dans le second état, le second dispositif de traitement est alimenté par la tension générée à travers la seconde paire de bornes.

6. Circuit selon la revendication 5, dans lequel le circuit est conçu de telle sorte que le commutateur soit commandé de manière à être dans le premier état lorsque le circuit fonctionne dans le premier mode de fonctionnement et à être dans le second état lorsque le circuit fonctionne dans le second mode de fonctionnement.

7. Circuit selon la revendication 6, dans lequel une borne (222) de la première paire de bornes est également une borne de la seconde paire de bornes, et dans lequel le commutateur peut être raccordé en alternance à l'autre borne (224) de la première paire de bornes et à l'autre (233) de la seconde paire de bornes.

8. Circuit selon l'une quelconque des revendications précédentes, dans lequel la première paire de bornes est raccordée à l'antenne de telle sorte que la tension à travers les bornes soit la tension générée à travers une première longueur de l'antenne, et dans lequel la seconde paire de bornes est raccordée à l'antenne de telle sorte que la tension à travers les bornes soit la tension générée à travers une seconde longueur de l'antenne qui est inférieure à la première longueur.

9. Dispositif RFID passif ou semi-passif incluant un circuit selon l'une quelconque des revendications précédentes.

10. Procédé de commande d'un circuit (202) pour un dispositif RFID passif ou semi-passif comprenant un premier dispositif de traitement (214) qui commande une sortie du dispositif RFID et un second dispositif de traitement (220) séparé du premier dispositif de traitement, le procédé comprenant les étapes consistant à :
recevoir un signal RF via une antenne (208) du dispositif RFID ;
alimenter le premier dispositif de traitement en utilisant une tension générée à travers l'antenne ;
dans un premier mode de fonctionnement, alimenter le second dispositif de traitement en utilisant la tension générée à travers la première paire (222, 224) de bornes de l'antenne ; et
dans un second mode de fonctionnement, alimenter le second dispositif de traitement en utilisant une tension générée à travers une seconde paire (222, 233) de bornes de l'antenne,
dans lequel au moins l'une de la paire de secondes bornes est raccordée à l'antenne entre la première paire de bornes de telle sorte que, lorsque le signal RF est reçu par l'antenne, une tension générée à travers la seconde paire de bornes soit inférieure à une tension générée à travers la première paire de bornes.

11. Procédé selon la revendication 10, comprenant en outre :
dans le second mode de fonctionnement, l'étape consistant à communiquer avec un lecteur RFID (204) en utilisant le premier dispositif de traitement.

12. Procédé selon la revendication 11, dans lequel le second dispositif de traitement comprend un capteur biométrique (230), tel qu'un scanner d'empreinte digitale, le procédé comprenant en outre les étapes consistant à :
dans le premier mode de fonctionnement, scanner des données biométriques en utilisant le capteur biométrique, et comparer les données biométriques scannées à des données biométriques préenregistrées en utilisant le second dispositif de traitement.

13. Procédé selon l'une quelconque des revendications 10 à 12, comprenant l'étape consistant à :
effectuer une transition du premier mode de fonctionnement au second mode de fonctionnement, dans lequel la transition inclut la commande d'un commutateur (234) pour passer d'un premier état, dans lequel le second dispositif de traitement est alimenté par la tension générée à travers la première paire de bornes, à un second état, dans lequel le second dispositif de traitement est alimenté par la tension générée à travers la seconde paire de bornes.

14. Procédé selon l'une quelconque des revendications 10 à 13, dans lequel la première paire de bornes est raccordée à l'antenne de telle sorte que la tension à travers les bornes soit la tension générée à travers une première longueur de l'antenne, et dans lequel la seconde paire de bornes peut être raccordée à l'antenne de telle sorte que la tension à travers les bornes soit la tension générée à travers une seconde longueur de l'antenne qui est inférieure à la première longueur.

15. Circuit, dispositif RFID ou procédé selon l'une quelconque des revendications précédentes, dans lequel le dispositif RFID est une carte de circuit intégré sans contact.
